# EUROPEAN PATENT APPLICATION

(11) **EP 2 757 663 A1**
(43) Date of publication of application: **23.07.2014**
(21) Application number: 13151626.2
(22) Date of filing: 17.01.2013
(51) Int. Cl.: H02K 1/27, H02K 7/18

(54) **Light weight rotor with Halbach magnetized permanent magnets for large external rotor machines**

(71) Applicant: Siemens Aktiengesellschaft, 80333 München (DE)
(72) Inventor: Xia, Zhen Ping, Sheffield, S10 5TR (GB); Wu, Lijian, Sheffield, S6 3NT (GB); Thomas, Arwyn, Cheshire, SK8 6HW (GB); Wu, Zhan-Yuan, Sheffield, S10 4BB (GB)

(57) **Abstract**

The present invention relates to a rotor (100) for an electrical machine, in particular a generator for a wind turbine. The rotor (100) comprises a rotor body (101) which has a circumferential extension along a circumferential direction (103) with respect to a rotary axis of the rotor (100), a first permanent magnet (110) comprising a first magnetic flux direction (111) and a second permanent magnet (120) comprising a second magnetic flux direction (121). The first permanent magnet (110) and the second permanent magnet (120) are arranged at a surface (102) of the rotor body (101) one after another along the circumferential direction (103), wherein the first permanent magnet (110) and the second permanent magnet (120) are oriented with respect to each other in such a way that at least a component of the first magnetic flux direction (111) is antiparallel to the second magnetic flux direction (121). The rotor (100) further comprises a first intermediate permanent magnet (130) comprising a first intermediate magnetic flux direction (131). The first intermediate permanent magnet (130) is arranged at the surface (102) of the rotor body (101) between the first permanent magnet (110) and the second permanent magnet (120) in such a way that the first intermediate magnetic flux direction (131) is different to the first magnetic flux direction (111) and the second magnetic flux direction (121), so that the first permanent magnet (110), the second permanent magnet (120) and the first intermediate permanent magnet (130) form a Halbach array. The rotor body (101) is made of a non-magnetic material.

## Description

### Field of invention

The present invention relates to a rotor for an electrical machine, in particular for a generator of a wind turbine. Furthermore, the present invention relates to a method of manufacturing a rotor of an electrical machine.

### Art background

Wind power generators comprise very large cross-sections and hence very large cross-sections of the conductors forming the windings of the generator.

The large cross-sections of the generators lead to large rotors and stators which comprise a high weight. In particular, iron rotor yokes to which permanent magnets are mounted are used. The permanent magnets are magnetized with a radial or a parallel orientated magnetic flux. The material of the rotor is generally iron such that the rotor functions as a back-iron rotor in order to shield the magnetic field.

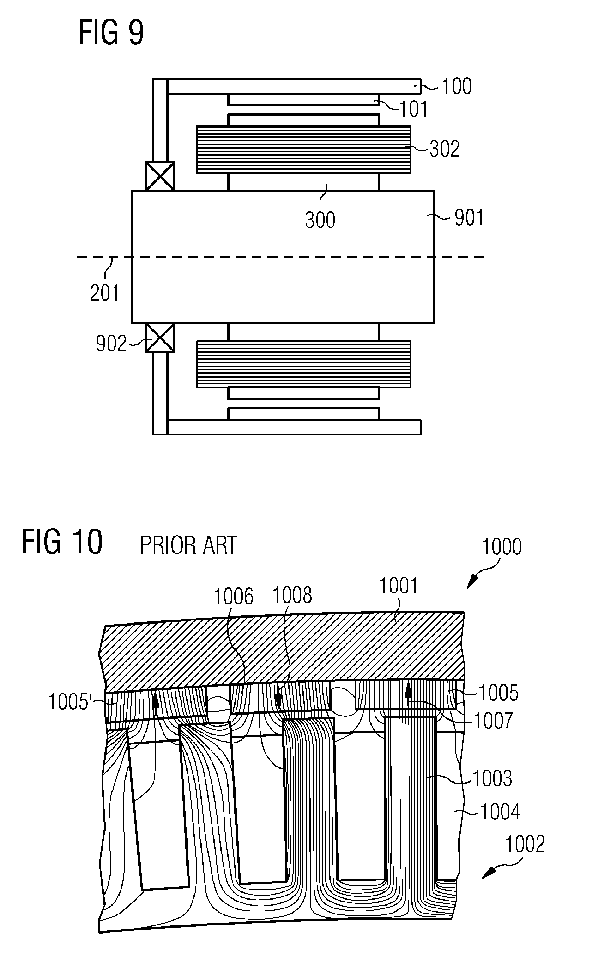

Fig. 10 shows a conventional generator comprising a conventional rotor 1001 of an external rotor type which surrounds a conventional stator 1002. The conventional stator 1002 comprises conventional teeth 1003, wherein between adjacent conventional teeth 1003, conventional windings 1004 are attached. A conventional first permanent magnet 1005 and a conventional second permanent magnet 1006 are attached to a radially inner side of the conventional rotor 1001. The conventional first permanent magnet 1005 comprises a first magnetic flux direction which is antiparallel to a conventional second magnetic flux direction 1008 of the conventional second permanent magnet 1006. Hence, in order to shield the magnetic field at a radially outer side of the conventional rotor 1001, the conventional rotor 1001 has to be manufactured out of a soft magnetic material such as iron.

This leads to a very heavy conventional rotor 1001 such that also manufacturing costs and manufacturing complexity rise. Furthermore, the heavy conventional rotor 1001 may be segmented in order to be able to manufacture such a heavy conventional rotor 1001. The segmentation of the conventional rotor 1001 may lead to severe noise and vibration problems.

Furthermore, due to the heavy weight of the conventional rotor 1001, complex and large dimensioned bearing structures have to be used.

EP 2 515 417 A1 discloses a synchronous permanent magnet machine, wherein a permanent magnet arrangement comprising a plurality of permanent magnet poles are arranged in order to generate a sinusoidal flux density distribution between two permanent magnet poles, so that cogging torque and torque ripple are reduced.

### Summary of the Invention

It may be an objective of the present invention to provide a rotor for an electrical machine which has a reduced weight.

This objective is solved by a rotor for an electrical machine, in particular a generator for a wind turbine, and by a method of manufacturing a rotor for an electrical machine according to the independent claims.

According to a first aspect of the present invention, a rotor for an electrical machine, in particular a generator for a wind turbine, is presented. The rotor comprises a rotor body which has a tubular profile with a ring shaped cross sectional shape. The rotor has a circumferential extension along a circumferential direction with respect to a rotary axis of the rotor. Furthermore, the rotor comprises a first permanent magnet comprising a first magnetic flux direction, a second permanent magnet comprising a second magnetic flux direction and a first intermediate permanent magnet comprising a first intermediate magnetic flux direction.

The first permanent magnet and the second permanent magnet are arranged at a surface of the rotor body one after another along a circumferential direction around the tubular profile of the rotor body, wherein the first permanent magnet and the second permanent magnet are oriented with respect to each other in such a way that at least a component of the first magnetic flux direction is antiparallel to the second magnetic flux direction. Hence, the first magnetic flux direction directs to an opposed direction with respect to the second magnetic flux direction. In an exemplary embodiment, the first magnetic flux direction is antiparallel to the second magnetic flux direction.

The first intermediate permanent magnet is arranged at the surface of the rotor body between the first permanent magnet and the second permanent magnet in such a way that the first intermediate magnetic flux direction is different from both (and in particular e.g. perpendicular to) the first magnetic flux direction and the second magnetic flux direction, so that the first permanent magnet, the second permanent magnet and the first intermediate permanent magnet form a Halbach array. The rotor body is made of a non-magnetic material.

The electrical machine may be for example an electrical motor or a generator. Specifically, the electrical machine may be a wind power generator of a wind turbine.

The electrical machine comprises the above described rotor and a stator. The stator for the electrical machine may be for example a stator which surrounds the (internal) rotor of the electrical machine or may be a stator which is surrounded by the (external) rotor of the electrical machine.

The stator body of the stator generally comprises a tubular profile with a ring-shaped cross-sectional shape. Accordingly, the rotor body of the rotor comprises a corresponding tubular profile with a ring-shaped cross-sectional shape. In the meaning of the present application, the ring-shaped cross-sectional shape may be a circular ring but may be a rectangular or polygonal ring which comprises edges. Elliptical cross-sectional shapes are also possible.

The rotor comprises a center axis which is generally coaxial with a rotary axis of the rotor. Around the rotary axis and for example along a surface of the tubular profile of the rotor body, the circumferential direction is defined. Furthermore, a radial direction runs from the rotor body to the rotary axis, wherein the radial direction is perpendicular to the circumferential direction and the rotary axis and runs through the rotary axis. The rotor body defines for example a so-called rotor yoke.

Each of the above-described permanent magnets comprises a respective magnetic flux direction through the respective permanent magnet. Specifically, each permanent magnet comprises a north pole, where the magnetic flux leaves the body of the permanent magnet and a south pole, where the magnetic flux enters the body of the permanent magnet.

The respective permanent magnets may form a respective magnet pole. Each permanent magnet may comprise a plurality of segmented permanent magnet elements. The resultant of the magnetic flux directions of the plurality of segmented magnet elements forms the respective magnetic flux direction of the permanent magnet.

The permanent magnets are made from a so-called hard ferromagnetic material such as alnico and ferrite that are subjected to special processing in a powerful magnetic field during manufacture in order to align the internal microcrystalline structure which makes them very hard to demagnetize. The permanent magnets may be formed of sintered NdFeB magnets or bonded anisotropic NdFeB magnets. The permanent magnet elements in the first permanent magnet, the second permanent magnet, the first intermediate permanent magnet, and/or the second intermediate permanent magnet are made of the same or different magnet materials.

The arrangement of the respective permanent magnets (i.e. the first permanent magnet, the second permanent magnet and the first intermediate permanent magnet) generates in combination a desired magnetic field which comprises a desired magnetic field.

The respective permanent magnets are mounted to a surface of the rotor body. The surface is in particular a surface of the rotor body which directs to the stator of the electrical machine. In other words, the surface to which the respective permanent magnets are attached may be for example a radially inner surface if the rotor is an external rotor or may be a radially outer surface if the rotor is an internal rotor.

According to the present invention, the arrangement of the respective first permanent magnet, the second permanent magnet and the first intermediate permanent magnet forms a so-called Halbach array. The Halbach array is a special arrangement of the respective permanent magnets, wherein the arrangement augments the generated magnetic field on one magnetic side of the permanent magnets (i.e. of the rotor body) while cancelling the field to near zero on the other, non-magnetic side of the permanent magnets (i.e. of the rotor body). This is achieved by having a spatial rotating pattern of the magnetization generated by the above-described permanent magnets (i.e. the first permanent magnet, the second permanent magnet and the first intermediate permanent magnet).

Specifically, the spatially rotating pattern of magnetization is generated if the first magnetic flux direction of the first permanent magnet is antiparallel to the second magnetic flux direction of the second permanent magnet, wherein additionally the first intermediate magnetic flux direction of the first intermediate permanent magnet is perpendicular to the first magnetic flux direction and the second magnetic flux direction.

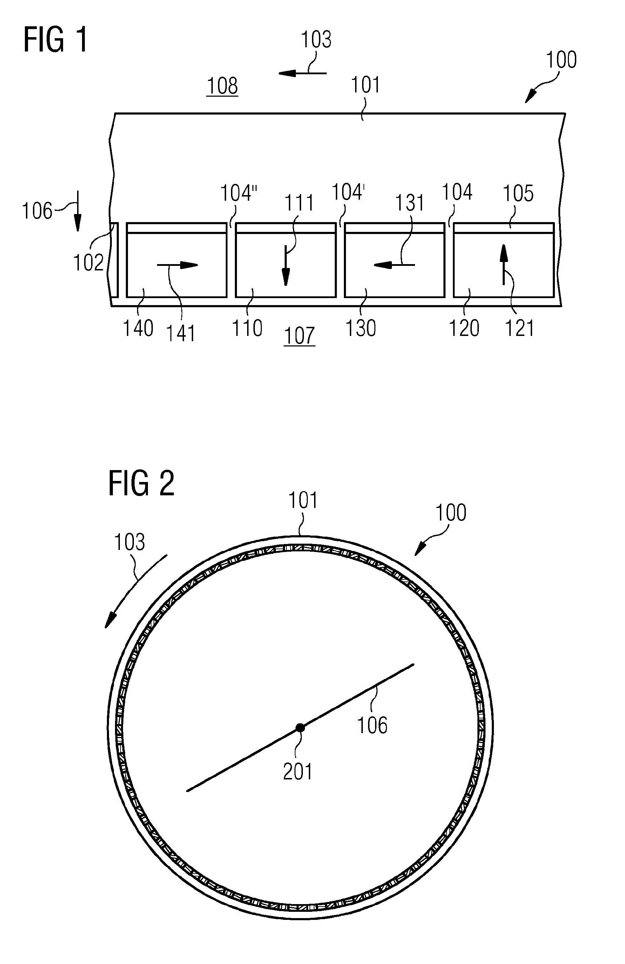

Specifically, in order to produce and augment the magnetic field on the magnetic side of the rotor body (i.e. the side which directs to the stator) the first magnetic flux direction directs to the magnetic side, the second magnetic flux direction directs away from the magnetic side and the first intermediate magnetic flux direction directs to the first magnetic flux direction (see more in detail in Fig. 1).

In conventional approaches, a shielding effect by the permanent magnets of the rotor body is not generated such that the rotor bodies needs a shielding effect. Hence, the rotor bodies have to be made of a heavy ferromagnetic material, such as iron. By the approach of the present invention, the magnetic field produced by the respective permanent magnets is self-shielded.

Hence, because the magnetic field may be concentrated to the magnetic side and may be shielded from the non-magnetic side of the rotor body by arranging the permanent magnets according to the present invention, the rotor body may consist of non-magnetic material, such as a paramagnetic material. For example, the non-magnetic material comprises an aluminium based material and/or a glass fibre based material.

Furthermore, by using the non-magnetic material for the rotor body, such as glass fibre, together with the fact that the rotor is moulded as a whole annular ring and not segmented the vibration and noise behaviour of the rotor/stator arrangement is improved. Hence, rotor yoke eddy current loss is removed and thus the efficiency may be improved.

The respective permanent magnets may be attached one after another along a circumferential direction in such a way that they contact each other. Furthermore, the respective permanent magnets may be arranged along the circumferential direction in such a way that a gap between each other may exist. Each magnet may be separated from adjacent permanent magnets and may be detached independently for maintenance reasons, for example. Furthermore, each permanent magnet may comprise an individual size. For example, each permanent magnet may comprise a different width along the circumferential direction in comparison to an adjacent permanent magnet. Each permanent magnet may comprise a plurality of sub-magnet elements which comprise different magnetic flux directions. The sum and the resultant, respectively, of the magnetic flux direction of the sub-elements generate the respective magnetic flux direction of the respective permanent magnet.

According to an exemplary embodiment of the present invention, the first magnetic flux direction and the second magnetic flux direction are oriented coaxial and parallel with the radial direction such that the first permanent magnet, the second permanent magnet and the first intermediate permanent magnet generate a magnetic field which is concentrated within a radial inner region of the rotor body or within a radial outer region of the rotor body.

According to a further exemplary embodiment of the present invention, the first permanent magnet, the second permanent magnet and/or the first intermediate permanent magnet are detachably fixed to the rotor body. Hence, for maintenance purposes, damaged or demagnetized permanent magnets may be exchanged. For example, the rotor body comprises respective detachable fixing means, such as fixing holes or fixing pins, to which respective fixing means of a respective permanent magnet is detachably attachable.

According to a further exemplary embodiment of the present invention, a magnetic layer is arranged between the surface on the one side and the first permanent magnet, the second permanent magnet and/or the first intermediate permanent magnet on the other side. In particular, the magnetic layer is made of a soft iron material which is used for creating a concentrated magnetic field which is stronger in comparison to a so-called air-cored support of the permanent magnets. iron may be used for the magnetic layer to provide the iron cored support of the permanent magnets to the rotor body. The magnetic layer formed from a soft iron material is magnetized when the magnetic field acts on the soft iron magnetic layer, wherein the magnetic layer does not remain magnetized if the magnetic field from the permanent magnets is removed.

According to a further exemplary embodiment of the present invention, the first permanent magnet, the second permanent magnet and/or the first intermediate permanent magnet are attached to the surface in an air-cored manner. Hence, no magnetic layer is interposed between the respective permanent magnets and the surface of the rotor body such that no magnetic core by a magnetic layer is formed. Hence, the permanent magnets comprise lower inductance than iron cored magnets.

According to a further exemplary embodiment, the first permanent magnet comprises a first permanent magnet element (e.g. sub-permanent magnet element) and a second permanent magnet element (e.g. sub-permanent magnet element). The first permanent magnet element and the second permanent magnet element comprise different or parallel aligned magnetic flux directions. The resultant of the respective magnetic flux direction forms the first magnetic flux direction. Furthermore, between the first permanent magnet element and the second permanent magnet element, a gap may be formed, for example. According to a further exemplary embodiment, the first intermediate permanent magnet comprises a first intermediate permanent magnet element and a second intermediate permanent magnet element. The first intermediate permanent magnet element and the second intermediate permanent magnet element comprise different or parallel aligned intermediate magnetic flux directions. An intermediate resultant of the magnetic flux directions forms the first intermediate magnetic flux direction. Hence, for example, a gap may be interposed between the respective intermediate permanent magnet elements, for example.

According to a further exemplary embodiment, the rotor comprises a second intermediate permanent magnet comprising a second intermediate magnetic flux direction. The first intermediate permanent magnet is arranged adjacent to a first circumferential end face of the first permanent magnet. The second intermediate permanent magnet is arranged adjacent to the second circumferential end face of the first permanent magnet, wherein the first circumferential end face and the second circumferential end face are opposite end faces of the first permanent magnet along the circumferential direction. The second intermediate permanent magnet is arranged at the surface of the rotor body such that the second intermediate magnetic flux direction is antiparallel to the first intermediate magnetic flux direction.

According to a further exemplary embodiment, a plurality of first permanent magnets, a plurality of second permanent magnets, a plurality of first intermediate permanent magnets and a plurality of second intermediate permanent magnets are arranged along the circumferential direction to the surface of the rotor bodies such that the surface is covered along the circumferential direction by the plurality of the first permanent magnets, the plurality of the second permanent magnets, the plurality of first intermediate permanent magnets and the plurality of second intermediate permanent magnets. In other words, the respective permanent magnets are attached along the circumferential direction in an alternating manner. The surface of the rotor body may be fully packed (beside the small gaps between some permanent magnets) with the permanent magnets along the circumferential direction.

According to a further exemplary embodiment, a generator for a wind turbine, in particular for a direct drive wind turbine, is described. The generator comprises a stator and the above-described rotor. The rotor is an external rotor which surrounds the stator, for example.

According to a further aspect of the present invention, a method of manufacturing a rotor for an electrical machine, in particular a generator for a wind turbine, is described. A rotor body is formed, wherein the rotor body has a tubular profile with a ring-shaped cross-sectional shape. A first permanent magnet comprising a first magnetic flux direction, a second permanent magnet comprising a second magnetic flux direction and a first intermediate permanent magnet comprising a first intermediate magnetic flux direction is formed. The first permanent magnet and the second permanent magnet are arranged at a surface of the rotor body one after another along a circumferential direction around the tubular profile of the rotor body. The first permanent magnet and the second permanent magnet are orientated with respect to each other in such a way that the first magnetic flux direction is antiparallel to the second magnetic flux direction. The first intermediate permanent magnet is arranged at the surface of the rotor body between the first permanent magnet and the second permanent magnet in such a way that the first intermediate magnetic flux direction is perpendicular to the first magnetic flux direction and the second magnetic flux direction, so that the first permanent magnet, the second permanent magnet and the first intermediate permanent magnet form a Halbach array. The rotor body is made of a non-magnetic material.

In an exemplary embodiment of the method, the rotor body is formed by a moulding process.

For example, because the rotor body comprises less weight, the rotor body may be formed from one piece and monolithically, respectively. The rotor body may comprise a large diameter, in particular if the rotor body is part of a direct drive wind turbine generator which comprises large diameters. In Direct Drive (DD) wind turbines, the generator is directly connected via a main shaft to (a hub of) the rotor of the respective wind turbine.

Hence, because it is not necessary to segment the rotor and because the rotor body according to the present invention may be formed monolithically, less torque ripple and cogging torque is generated by the generator.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a section of a rotor according to an exemplary embodiment of the present invention;
Fig. 2 shows a schematical view of a rotor according to an exemplary embodiment of the present invention;
Fig. 3 shows a schematical view of a rotor/stator arrangement according to an exemplary embodiment of the present invention;
Fig. 4 shows a schematical view of a magnetic field which is generated by the rotor according to an exemplary embodiment of the present invention;
Fig. 5 to Fig. 8 show schematic views of exemplary arrangements of permanent magnets to the rotor according to exemplary embodiments of the present invention;
Fig. 9 shows a schematical view of a generator for a wind turbine comprising the rotor according to an exemplary embodiment of the present invention; and
Fig. 10 shows a conventional rotor/stator arrangement.

### Detailed Description

The illustrations in the drawings are schematic. It is noted that in different figures similar or identical elements are provided with the same reference signs.

Fig. 1 shows a section of a rotor 100 for an electrical machine, such as a generator for a wind turbine. The rotor 100 comprises a rotor body 101 which has a tubular profile with a ring-shaped cross-sectional shape (see e.g. Fig. 2). Furthermore, the rotor 100 comprises a first permanent magnet 110 comprising a first magnetic flux direction 111, a second permanent magnet 120 comprising a second magnetic flux direction 121 and a first intermediate permanent magnet 130 comprising a first intermediate magnetic flux direction 131.

The first permanent magnet 110 and the second permanent magnet 120 are arranged at a surface 102 of the rotor body 101 one after another along a circumferential direction 103 (see e.g. Fig. 2) around the tubular profile of the rotor body 101. The first permanent magnet 110 and the second permanent magnet 120 are orientated with respect to each other in such a way that the first magnetic flux direction 111 is antiparallel to the second magnetic flux direction 121.

The first intermediate permanent magnet 130 is arranged at the surface 102 of the rotor body 101 between the first permanent magnet 110 and the second permanent magnet 120 in such a way that the first intermediate magnetic flux direction 131 is perpendicular to the first magnetic flux direction 111 and the second magnetic flux direction 121, so that the first permanent magnet 110, the second permanent magnet 120 and the first intermediate permanent magnet 130 form a Halbach array, which means that a concentration of the magnetic field is generated at one side of the rotor body 101. The rotor body 101 is made of a non-magnetic material.

Specifically, the rotor body 101 comprises a rotational axis (which corresponds to a center axis 201 (see Fig. 2)), wherein a radial direction 106 is perpendicular to the rotational axis and crosses the rotational axis. The first magnetic flux direction 111 and the second magnetic flux direction 121 comprise at least one respective component which is orientated parallel or antiparallel, respectively, to the radial direction 106, and at least one component of the first intermediate magnetic flux direction 131 is perpendicular to the radial direction 106 such that the first permanent magnet 110 and the second permanent magnet 120 and the first intermediate permanent magnet 130 generate a magnetic field which is concentrated at a magnetic side 107 of the rotor body 101. The magnetic side 107 comprises a denser and stronger magnetic field in comparison to the non-magnetic side 108 which is located at an opposite side with respect to the magnetic side 107.

The concentration of the magnetic field is generated by the orientation of the respective magnetic flux directions 111, 121, 131 as shown in Fig. 1. For example, the first magnetic flux direction 111 directs along the radial direction 106 to the magnetic side 107. The second magnetic flux direction 121 of the second permanent magnet 120 directs along the radial direction 106 away from the magnetic side 107. The first intermediate magnetic flux direction 131 of the first intermediate permanent magnet 130 directs to the first permanent magnet 110. This arrangement forms a so-called Halbach array (arrangement of permanent magnets 110, 120, 130) which leads to a concentrated magnetic field at the magnetic side 107 and prevents or reduces a magnetic field at the non-magnetic side 108. Hence, further shielding provisions, such as the use of a magnetic material for the rotor body 101 may be obsolete.

As shown in Fig. 1, the first intermediate permanent magnet 130 is arranged adjacent to a first circumferential end face of the first permanent magnet 110 and a second intermediate permanent magnet 140 is arranged adjacent to a second circumferential end face of the first permanent magnet 110, wherein the second circumferential end face is located along a circumferential direction 103 at an opposite side with respect to the first circumferential end face.

The second intermediate magnetic flux direction 141 of the second intermediate permanent magnet 140 is directed antiparallel to the first intermediate magnetic flux direction 131. Specifically, according to the exemplary embodiment shown in Fig. 1, the second intermediate magnetic flux direction 141 directs to the first magnetic flux direction 111. Hence, both intermediate magnetic flux directions 131, 141 direct to the first permanent magnet 110 which first magnetic flux direction 111 directs to the magnetic side 107.

Furthermore, as can be seen in Fig. 1, each permanent magnet 110, 120, 130, 140 forms a separated unit with respect to each other. Between the respective permanent magnets 110, 120, 130, 140, gaps 104, 104', 104" may exist. Alternatively, all permanent magnets 110, 120, 130, 140 or groups of permanent magnets 110, 120, 130, 140 may be arranged along the circumferential direction 103 such way that the respective permanent magnets 110, 120, 130, 140 contacts each other.

Furthermore, the respective permanent magnets 110, 120, 130, 140 are attached to the surface 102, wherein the surface 102 may form in an exemplary embodiment an outer surface of the rotor body 101. Alternatively, as can be taken from Fig. 1, the rotor body 101 may form a groove which comprises with its inner side the surface 102. The respective permanent magnets 110, 120, 130, 140 may be arranged one after another along the circumferential direction 103 within the groove of the rotor body 101. By arranging the permanent magnets 110, 120, 130, 140 into the groove of the rotor 100, the permanent magnets 110, 120, 130, 140 may be protected from corrosion and rust, for example.

The rotor body 101 may comprise fixing means by which the respective permanent magnets 110, 120, 130, 140 may be attached in a detachable manner, so that the respective permanent magnets 110, 120, 130, 140 may be exchanged in case of a damage.

The permanent magnets 110, 120, 130, 140 may be mounted to the rotor body 101 in an air-cored manner or, as shown in Fig. 1, by an iron cored manner, wherein a magnetic layer 105, such as a layer comprising a soft material (iron), is interposed between the respective permanent magnets 110, 120, 130, 140 and the surface 102.

As can be taken from Fig. 2, the rotor body 101 may be formed monolithically and may not consist of a plurality of segments. Furthermore, as shown in Fig. 2, the rotor body 101 is fully packed along the circumferential direction with the arrangement of permanent magnets 110, 120, 130, 140 as shown in Fig. 1.

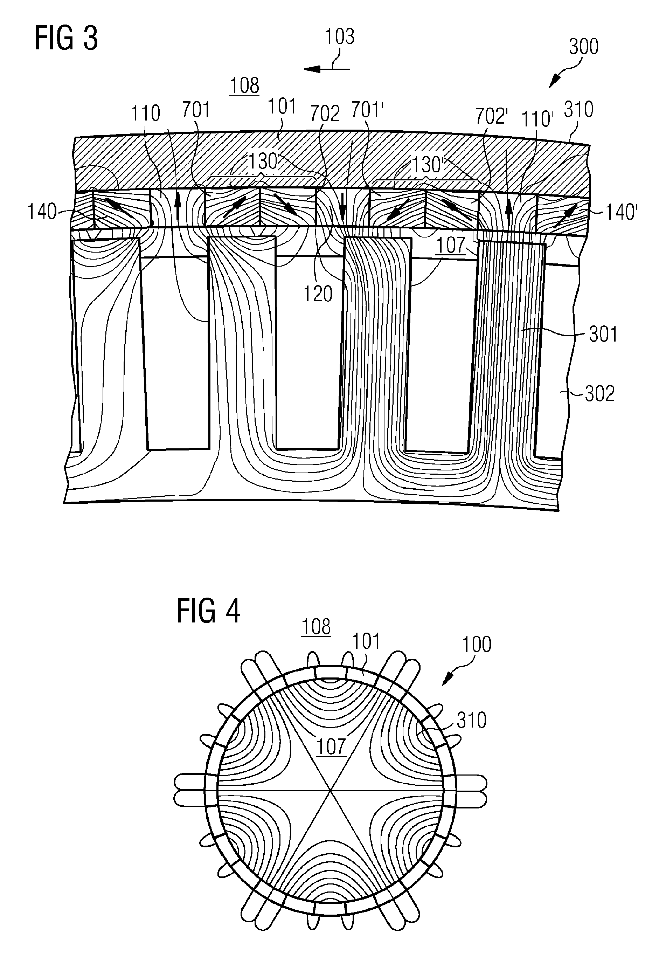

Fig. 3 shows a rotor/stator arrangement comprising the rotor 100 and a stator 300. The rotor 100 forms an external rotor wherein the rotor body 101 surrounds the stator 300.

The stator comprises along the circumferential direction 103 a plurality of stator teeth 301 between which gaps are formed. Into the gaps respective windings 302 of the stator 300 are attached.

The permanent magnets 110, 120, 130, 130', 140, 140' are arranged with its magnetic flux directions similar to the arrangement as shown in Fig. 1. Hence, the magnetic side 107 is formed at the side of the rotor body 101 which directs to the stator 300. In Fig. 3, respective magnetic field lines 310 are shown, wherein the concentration of the magnetic field lines 310 is denser at the magnetic side 107 in comparison to the non-magnetic side 108. The higher density of the magnetic field lines 310 defines a stronger magnetic field.

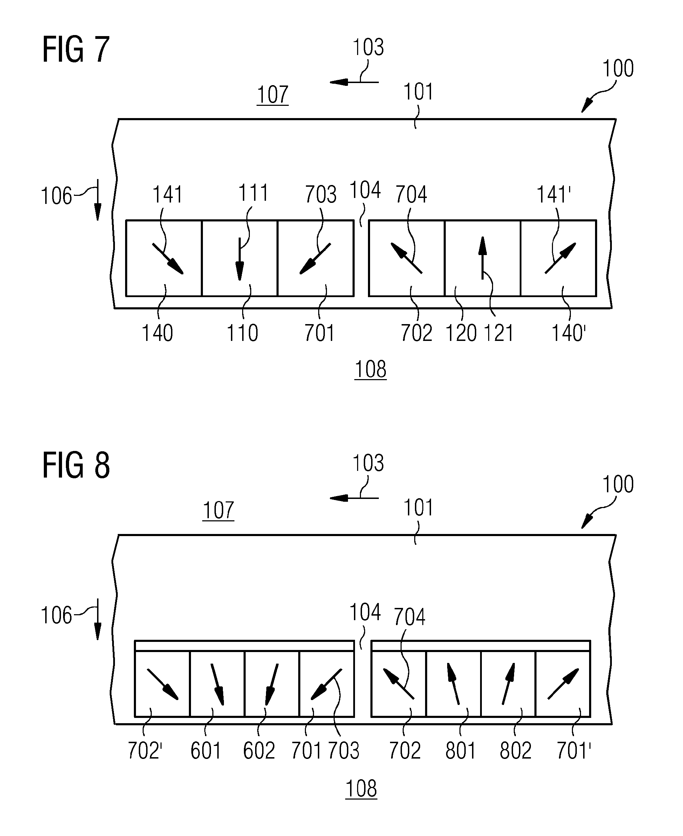

Furthermore, as shown in Fig. 3, the respective intermediate permanent magnets 130, 130' may consist of a first permanent magnet element 701 and a second permanent magnet element 702 (shown in more detail in Fig. 7). The resultant of the respective permanent magnet elements 701, 702 forms the first intermediate magnetic flux direction 131 which is perpendicular to the first magnetic flux direction 111 and the second magnetic flux direction 121. For example, the magnetic flux direction of the first permanent magnet element 701 may comprise an approximately 45° angle with respect to the first magnetic flux direction 111 and the magnetic flux direction of the second permanent magnet element 702 may form an approximately 135° angle with respect to the first magnetic flux direction 111. Hence, the resultant is the first intermediate magnetic flux direction 131 which is perpendicular to the first magnetic flux direction 111.

Fig. 4 shows an exemplary view of the magnetic field which is generated by the arrangement of the permanent magnets 110, 120, 130, 140 of the present invention. As can be taken from Fig. 4, the density of the magnetic field lines 310 is higher in the center region of the rotor body 101 at the magnetic side 107, respectively, in comparison to an outer, non-magnetic side 108 of the rotor body 101.

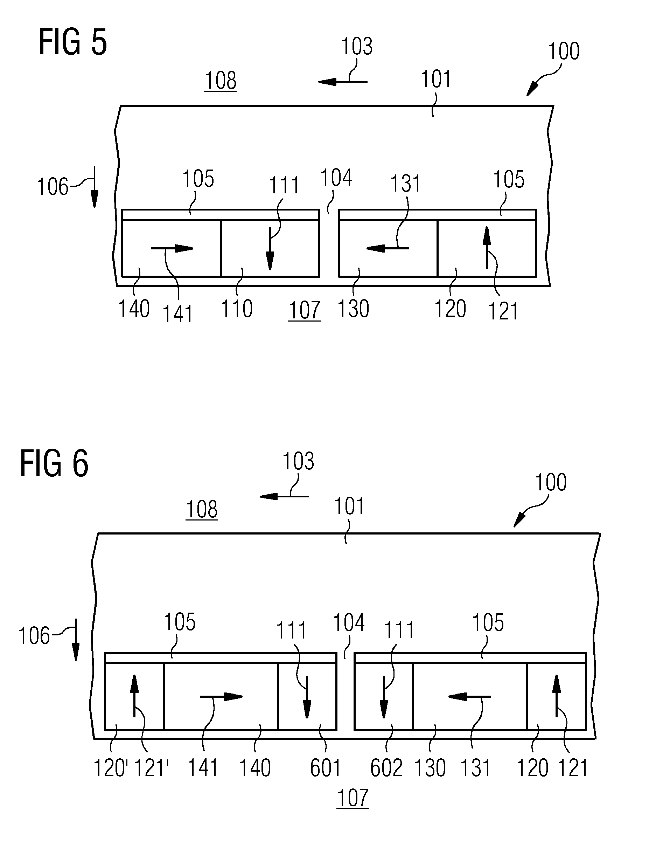

Fig. 5 shows an exemplary embodiment, wherein the first permanent magnet 110 and the second intermediate permanent magnet 140 are grouped in a first group and the second permanent magnet 120 and the first intermediate permanent magnet 130 are grouped in a second group of permanent magnets. Between both groups, the gap 104 is provided. Each of the groups of permanent magnets 110, 120, 130, 140 may be supported in an iron cored like manner with the magnetic layer 105.

Fig. 6 shows a further exemplary embodiment of an arrangement of the permanent magnets 110, 120, 130, 140. Specifically, the first permanent magnet 110 is split into a first permanent magnet element 601 and a second permanent magnet element 602. Both permanent magnet elements 601, 602 comprise a parallel magnetic flux direction 111, wherein the resultant of the magnetic flux directions of the respective permanent magnet elements 601, 602 forms the first magnetic flux direction 111.

A first group of permanent magnets is formed by a second permanent magnet 120' comprising the second magnetic flux direction 121', the second intermediate permanent magnet 140 comprising the second intermediate magnetic flux direction 141 and the first permanent magnet element 601. A second group of permanent magnets is formed by the second permanent magnet element 602, the first intermediate permanent magnet 130 comprising the first intermediate magnetic flux direction 131 and the second permanent magnet 120 comprising the second magnetic flux direction 121.

Fig. 7 shows a further exemplary embodiment of an arrangement of permanent magnets 110, 120, 130, 140, 140'. A first group of permanent magnets is formed by the second intermediate permanent magnet 140 comprising the second intermediate magnetic flux direction 141, the first permanent magnet 110 comprising the first magnetic flux direction 111 and the first intermediate permanent magnet element 701 comprising the first intermediate magnetic element flux direction 703.

A second group of permanent magnets is formed by a first intermediate permanent magnet element 702 comprising the first intermediate magnetic element flux direction 704, the second permanent magnet 120 comprising the second magnetic flux direction 121 and the second intermediate permanent magnet 140 comprising the second intermediate magnetic flux direction 141'.

Between the first intermediate permanent magnet element 701 and the second intermediate permanent magnet element 702, the gap 104 exists.

The resultant of the first intermediate magnetic element flux direction 703 and the second intermediate magnetic element flux direction 704 forms the first intermediate magnetic flux direction 131. For example, the first intermediate magnetic element flux direction 703 comprises a 45° angle to the first magnetic flux direction 111 and the second intermediate magnetic element flux direction 704 comprises a 135° angle with respect to the first magnetic flux direction 111, such that the resultant of the intermediate magnetic element flux directions 703, 704 forms the first intermediate magnetic flux direction 131.

Fig. 8 shows a further arrangement of a permanent magnet according to an exemplary embodiment of the invention. A first group of permanent magnets comprises the second intermediate permanent magnet element 702', the first permanent magnet element 601, the second permanent magnet element 602 and the first intermediate permanent magnet element 701.

The second group of permanent magnets comprises the second intermediate permanent magnet 702, the further first permanent magnet element 801, a further second permanent magnet element 802 and the first intermediate permanent magnet element 701'. Between both groups, a gap 104 is formed.

As described above for Fig. 8, the first intermediate magnetic element flux direction 703 and the second intermediate magnetic element flux direction 704 form a resultant which has the first intermediate magnetic flux direction 131 which is perpendicular to respective resultant of the magnetic flux directions 111, 121 (see Fig. 1).

Furthermore, the first permanent magnet 110 is split into a first permanent magnet element 601 and the second permanent magnet element 602, wherein the respective magnetic flux directions of the respective permanent magnet elements 601, 602 forms a resultant which is parallel to the first magnetic flux direction 111. Accordingly, the second permanent magnet 120 is split into a further first permanent magnet element 801 and a further second permanent magnet element 802, wherein the resultant of magnetic flux directions of the respective further permanent magnet elements 801, 802 forms the second magnetic flux direction 121.

Fig. 9 shows an exemplary embodiment of a generator for a wind turbine. In particular, the generator of Fig. 9 may be a generator for a direct drive wind turbine. The rotor 100 with its rotor body 101 is supported by a bearing 902 to a shaft 901 of the generator. The shaft 901 is a static shaft 901 to which the stator 300 together with its windings 302 is attached. The rotor 100 rotates around the shaft 901 and the stator 300, respectively. Because the rotor body 101 is formed of a lightweight non-magnetic material, such as glass fibre or aluminium, a proper support by the bearing 902 is achieved in comparison to heavy weight iron stator bodies. This is important in particular for direct drive wind turbines, because the generator comprises a large diameter, and specifically the rotor 100 is supported to constructional restrictions only by one bearing 902.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor (100) for an electrical machine, in particular a generator for a wind turbine, the rotor (100) comprising
a rotor body (101) which has a circumferential extension along a circumferential direction (103) with respect to a rotary axis of the rotor (100),
a first permanent magnet (110) comprising a first magnetic flux direction (111),
a second permanent magnet (120) comprising a second magnetic flux direction (121),
wherein the first permanent magnet (110) and the second permanent magnet (120) are arranged at a surface (102) of the rotor body (101) one after another along the circumferential direction (103),
wherein the first permanent magnet (110) and the second permanent magnet (120) are oriented with respect to each other in such a way that at least a component of the first magnetic flux direction (111) is antiparallel to the second magnetic flux direction (121), and
a first intermediate permanent magnet (130) comprising a first intermediate magnetic flux direction (131),
wherein the first intermediate permanent magnet (130) is arranged at the surface (102) of the rotor body (101) between the first permanent magnet (110) and the second permanent magnet (120) in such a way that the first intermediate magnetic flux direction (131) is different from both the first magnetic flux direction (111) and the second magnetic flux direction (121), so that the first permanent magnet (110), the second permanent magnet (120) and the first intermediate permanent magnet (130) form a Halbach array, and
wherein the rotor body (101) is made of a non-magnetic material.

2. Rotor (100) according to claim 1,
wherein the first magnetic flux direction (111) and the second magnetic flux direction (121) oriented parallel to a radial direction (106) with respect to the rotary axis such that the first permanent magnet (110), the second permanent magnet (120) and the first intermediate permanent magnet (130) generate a magnetic field which is concentrated within a radial inner region of the rotor body (101) or within a radial outer region of the rotor body (101).

3. Rotor (100) according to claim 1 or 2,
wherein the non-magnetic material comprises an aluminium based material and/or a glass fibre based material.

4. Rotor (100) according to one of the claims 1 to 3, wherein the first permanent magnet (110), the second permanent magnet (120) and/or the first intermediate permanent magnet (130) are detachably fixed to the rotor body (101).

5. Rotor (100) according to one of the claims 1 to 4, further comprising
a magnetic layer (105) which is arranged between the surface (102) on the one side and the first permanent magnet (110), the second permanent magnet (120) and/or the first intermediate permanent magnet (130) on the other side.

6. Rotor (100) according to one of the claims 1 to 4, wherein the first permanent magnet (110), the second permanent magnet (120) and/or the first intermediate permanent magnet (130) are attached to the surface (102) in an air-cored manner.

7. Rotor (100) according to one of the claims 1 to 6, wherein the first permanent magnet (110) comprises a first permanent magnet element (601) and a second permanent magnet element (602),
wherein the first permanent magnet element (601) and the second permanent magnet element (602) comprise different or parallel aligned magnetic flux directions, and
wherein a resultant of the magnetic flux directions forms the first magnetic flux direction (111).

8. Rotor (100) according to one of the claims 1 to 7, wherein the first intermediate permanent magnet (130) comprises a first intermediate permanent magnet element (701) and a second intermediate permanent magnet element (702), wherein the first intermediate permanent magnet element (701) and the second intermediate permanent magnet element (702) comprise different or parallel aligned intermediate magnetic flux directions, and
wherein an intermediate resultant of the magnetic flux directions forms the first intermediate magnetic flux direction (131).

9. Rotor (100) according to one of the claims 1 to 8, wherein the first permanent magnet (110), the second permanent magnet (120) and/or the first intermediate permanent magnet (130) are arranged in such a way that gap (104) is formed between adjacent ones of the first permanent magnet (110), the second permanent magnet (120) and/or the first intermediate permanent magnet (130).

10. Rotor (100) according to one of the claims 1 to 9, further comprising
a second intermediate permanent magnet (140) comprising a second intermediate magnetic flux direction(141),
wherein the first intermediate permanent magnet (130) is arranged adjacent to a first circumferential end face of the first permanent magnet (110),
wherein the second intermediate permanent magnet (140) is arranged adjacent to a second circumferential end face of the first permanent magnet (110),
wherein the first circumferential end face and the second circumferential end face are opposite end faces of the first permanent magnet (110) along the circumferential direction (103), and
wherein the second intermediate permanent magnet (140) is arranged at the surface (102) of the rotor body (101) such that the second intermediate magnetic flux direction (141) is different from the first magnetic flux direction (111) of the first permanent magnet (110).

11. Rotor (100) according to claim 10,
wherein the second intermediate permanent magnet (140) is arranged at the surface (102) of the rotor body (101) such that the second intermediate magnetic flux direction (141) is antiparallel to the first intermediate magnetic flux direction (131).

12. Rotor (100) according to claims 10 or 11,
wherein the second intermediate permanent magnet (140) comprises a further first intermediate permanent magnet element and a further second intermediate permanent magnet element, wherein the further first intermediate permanent magnet element and the further second intermediate permanent magnet element comprise different or parallel aligned further intermediate magnetic flux directions, and
wherein a further intermediate resultant of the magnetic flux directions forms the second intermediate magnetic flux direction (141).

13. Rotor (100) according to one of the claims 10 to 12, wherein a plurality of first permanent magnets (110), a plurality of second permanent magnets (120), a plurality of first intermediate permanent magnets (130) and a plurality of second intermediate permanent magnets (140) are arranged along the circumferential direction (103) to the surface (102) of the rotor body (101) such that the surface (102) is covered along the circumferential direction (103) by the plurality of first permanent magnets (110), the plurality of second permanent magnets (120), the plurality of first intermediate permanent magnets (130) and the plurality of second intermediate permanent magnets (140).

14. Generator for a wind turbine, in particular for a direct drive wind turbine, the generator comprising
a stator (300), and
a rotor (100) according to one of the claims 1 to 13,
wherein the rotor (100) is rotatable with respect to the stator (300).

15. Generator according to claim 14,
wherein the rotor (100) is an external rotor (100) which surrounds the stator (300).

16. Method of manufacturing a rotor (100) for an electrical machine, in particular a generator for a wind turbine, the method comprising
forming a rotor body (101) which has a circumferential extension along a circumferential direction (103) with respect to a rotary axis of the rotor (100),
forming a first permanent magnet (110) comprising a first magnetic flux direction (111),
forming a second permanent magnet (120) comprising a second magnetic flux direction (121),
arranging the first permanent magnet (110) and the second permanent magnet (120) to a surface (102) of the rotor body (101) one after another along a circumferential direction (103) around the tubular profile of the rotor body (101),
wherein the first permanent magnet (110) and the second permanent magnet (120) are oriented with respect to each other in such a way that at least a component of the first magnetic flux direction (111) is antiparallel to the second magnetic flux direction (121), and
forming a first intermediate permanent magnet (130) comprising a first intermediate magnetic flux direction (131),
arranging the first intermediate permanent magnet (130) to the surface (102) of the rotor body (101) between the first permanent magnet (110) and the second permanent magnet (120) in such a way that the first intermediate magnetic flux direction (131) is different from both the first magnetic flux direction (111) and the second magnetic flux direction (121), so that the first permanent magnet (110), the second permanent magnet (120) and the first intermediate permanent magnet (130) form a Halbach array, and
wherein the rotor body (101) is made of a non-magnetic material.

17. Method according to claim 16,
wherein the forming of the rotor body (101) comprises
forming the rotor body (101) by a moulding process.
